# EUROPÄISCHE PATENTANMELDUNG

(11) **EP 0 894 744 A1**
(43) Veröffentlichungstag der Anmeldung: **03.02.1999**
(21) Anmeldenummer: 98111487.9
(22) Anmeldetag: 23.06.1998
(51) Int. Cl.: B65G 17/38, F16G 13/18, F16G 13/06

(54) **Kette mit Kettengliedern**

(30) Priorität: 31.07.1997 DE 19733012
(71) Anmelder: FRAUNHOFER-GESELLSCHAFT ZUR FÖRDERUNG DER ANGEWANDTEN FORSCHUNG E.V., 80636 München (DE); Ketten-Wulf Betriebs GmbH, Gelenkketten & Kettenräderfabrik, 59889 Eslohe-Kückelheim (DE)
(72) Erfinder: Kauschke, Peter, Dipl.-Ing., 44137 Dortmund (DE); Wilke, Hermann, Dipl.-Ing., 59889 Eslohe (DE)

(57) **Zusammenfassung**

Die Erfindung bezieht sich auf eine Kette mit Kettengliedern, die einen zentralen Bolzen aufweisen, um den mittig eine Buchse drehbar angeordnet ist, über die der Bolzen beidseitig hinausragt und die mit Innenlaschen verbunden ist sowie mit beidseitig an der Buchse angrenzenden, den Bolzen drehbar umgebenden weiteren Buchsen, an denen jeweils Aussenlaschen befestigt sind.

Die Erfindung zeichnet sich dadurch aus, daß an wenigstens einer der Buchsen eine Vorrichtung angebracht ist, die mit dem Bolzen in Wirkverbindung tritt und eine relative Drehbewegung des Bolzens zur Buchse in eine Verdrehrichtung ermöglicht und in entgegengesetzter Drehrichtung eine verdrehsichere Verbindung zwischen Bolzen und Buchse schafft

## Beschreibung

Die Erfindung bezieht sich auf eine Kette mit Kettengliedern, die einen zentralen Bolzen aufweisen, um den mittig eine Buchse drehbar angeordnet ist, über die der Bolzen beidseitig hinausragt und die mit Innenlaschen verbunden ist sowie mit beidseitig an der Buchse angrenzenden, den Bolzen drehbar umgebenden weiteren Buchsen, an denen jeweils Aussenlaschen befestigt sind.

Ketten und insbesondere Förderketten unterliegen einer Verschleißbeanspruchung in den Kettengelenken, die durch die Reibung zwischen Bolzen und Buchse beim Abknicken der Kette im Gelenk unter Last hervorgerufen wird. Das Abknicken der Kette erfolgt beim Umlauf der Förderkette um ein Antriebsrad und Umlenkrad. Beim sogenannten. Einlaufen in das Antriebsrad wird die Kette um einen geomtrieabhängigen Winkel geschwenkt bzw. geknickt, wohingegen die Kette beim Auslaufen in ihre Ausgangslage zurückschwenkt. Beim Umlenkrad erfolgen prinzipiell dieselben Bewegungen, allerdings unter nur geringer Last, wodurch kein nennenswerter Verschleiß entsteht.

Der Verschleiß äußert sich im Materialabtrag an der Mantelfläche des Bolzens, wohingegen der Materialabtrag an der inneren Mantelfläche der Buchse i.a. von untergeordneter Bedeutung ist. Der Verschleiß führt zu einer Vergrößerung des Gelenkspiels, d.h. die Differenz zwischen Bolzendurchmesser und Buchseninnendurchmesser wird vergrößert, wodurch auch die Kettenteilung vergrößert wird, d.h. der Abstand zwischen zwei aufeinanderfolgenden Gelenken wird größer. Übersteigt die Kettenteilung ein zulässiges Maß, ist der Eingriff mit den verzahnten Kettenrädern nicht mehr gewährleistet und die Kette muß ersetzt werden.

In den letzten Jahren war es das Ziel unterschiedlicher Entwicklungen, den Verschleiß der Kettengelenke und insbesondere den damit verbundenen Verschleiß der Bolzen zu reduzieren, um so die Standzeit der Ketten zu verlängern.

Maßnahmen dazu waren
- Schutz der Kettengelenke vor Umwelteinflüssen durch Abdichtung,
- Erhöhung des Verschleißwiderstandes im Kettengelenk durch Oberflächenbeschichtungen,
- Schmierung der Gelenke mit speziellen Schmierstoffen sowie
- Kombinationen der o.a. Maßnahmen.

In der DE 42 33 552 C2 wird eine Laschenkette beschrieben, bei der die gewöhnlich verdrehfeste Lagerung des Bolzens in den Außenlaschen aufgehoben ist. Zwar ist der Bolzen demnach "schwimmend" in drei Buchsen gelagert, die die Außen- und Innenlaschen tragen, doch kann sich der Bolzen in dieser bekannten Anordnung nicht selbständig drehen, insbesondere unter Zugbelastung der Kette, die im Betrieb immer vorliegt, so daß auch der Bolzen in dieser Anorndung einem zunehmendem Verschleiß unterliegt.

Der Erfindung liegt die Aufgabe zugrunde eine gattungsgemäße Kette mit Kettengliedern derart weiterzubilden, daß der lokale Bolzenverschleiß erheblich reduziert wird, um die Lebensdauer der Kettenglieder zu verlängern. Die Lösung der Aufgabe ist im Anspruch 1 angegeben. Den Erfindungsgedanken vorteilhaft weiterbildende Merkmale sind Gegenstand der Unteransprüche.

Erfindungsgemäß ist eine Kette gemäß dem Oberbegriff des Anspruchs 1 derart weitergebildet, daß an wenigstens einer der weiteren Buchsen oder an der mittig angeordneten Buchse eine Vorrichtung angebracht ist, die mit dem Bolzen in Wirkverbindung tritt und eine relative Drehbewegung des Bolzens zur Buchse in eine Verdrehrichtung ermöglicht und in entgegengesetzter Drehrichtung eine verdrehsichere Verbindung zwischen Bolzen und Buchse schafft. Die Erfindung geht von der Überlegung aus, daß der Verschleiß am Kettenbolzen sich bei herkömmlichen Kettengelenken auf die in Zugrichtung liegende Seite des Bolzens beschränkt. Die vorliegende Erfindung ermöglicht es, den Bolzen während des Betriebes in der Buchse zwangsweise zu drehen und so eine gleichmäßige Verteilung des Verschleißes auf die gesamte Mantelfläche des Bolzens zu realisieren.

Die erfindungsgemäße Kettenanordnung bewirkt eine zwangsweise, schrittweise Rotation des Bolzens wie folgt; Der Bolzen ist nicht mit den Außenlaschen verbunden, sondern drehbar in zusätzlichen Buchsen gelagert, die die Außenlaschen tragen. Hinzu kommen mechanische Elemente, die die schrittweise Rotation des Bolzens zwangsweise bewirken. In Verbindung mit den Figuren werden nachfolgend zwei Varianten beschrieben: Hülsenfreiläufe (Variante 1) und Schlingfedern (Variante 2). Werden zwei Bauteile über diese Elemente miteinander verbunden, so wird ein Verdrehen beider Bauteile gegeneinander in eine Drehrichtung ermöglicht. In der anderen Drehrichtung "sperrt" der Freilauf bzw. die Schlingfeder.

So wird beim Schwenken der Kette der Bolzen in der Buchse rotiert (der Drehwinkel ist maximal so groß wie der Schwenkwinkel der Kette), beim Zurückschwenken wird der Bolzen aber festgehalten und nicht mit den Außenlaschen zurückgedreht (oder umgekehrt).

Grundsätzlich denkbar ist auch der Einsatz von Klemmrollen- oder Klemmkörperfreiläufen, die nach demselben Prinzip funktionieren wie die Hülsenfreiläufe. Eine weitere Variante ist, das "Sperren" formschlüssig mit einer Einrichtung nach dem Prinzip "Klinkensperre" zu realisieren.

Der wesentliche Vorteil der Erfindung liegt darin, daß der Verschleiß des Kettenbolzens über seine gesamte Umfangsfläche (360°) verteilt wird, wodurch die Standzeit der Kette erhöht werden kann.

Die Erfindung soll anhand von Ausführungsbeispielen unter Bezugnahme auf die Zeichnungen beschrieben werden. Es zeigen:
- Fig. 1: Variante 1 mit Hülsen-Freilauf
- Fig. 2: Variante 2 mit Schlingfeder
- Fig. 3: Variante mit Klemmkörperfreilauf
- Fig. 4: alternative Variante mit Klemmkörperfreilauf
- Fig. 5: alternative Variante mit Schlingfeder
- Fig. 6: alternative Variante mit Schlingfeder
- Fig. 7: alternative Variante mit Schlingfeder
- Fig. 8: alternative Variante mit Schlingfeder
- Fig. 9: alternative Variante mit Hülsenfreilauf
- Fig. 10: alternative Variante mit Schlingfeder

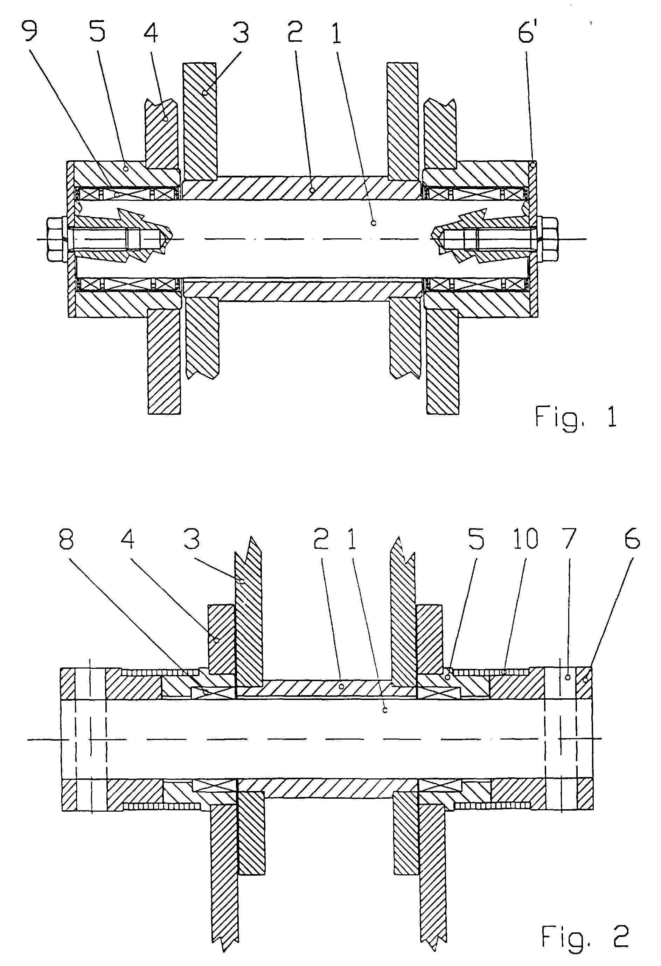

In Figur 1 ist ein Kettenglied einer Förderkette mit schrittweise zwangsgeführt, drehendem Bolzen 1 mit einem Hülsenfreilauf 9 gemäß der Variante 1 dargestellt.

Der Bolzen 1 ist über seine gesamte Länge in Buchsen 2, 5 gelagert. Zusammen mit der mittig um den Bolzen angeordneten Buchse 2, die die Innenlaschen 3 trägt, bildet er ein Gelenk im herkömmlichen Sinne. Die Außenlaschen 4 sind auf den Buchsen 5, die an die Buchse 2 beidseitid anschließen, befestigt. Zwischen den Buchsen 5 und dem Bolzen 1 befinden sich erfindungsgemäß Hülsenfreiläufe 9, die eine schrittweise Rotation des Bolzens 1 bei jedem Umlauf um ein Antriebsrad (nicht in der Figur dargestellt) sowie um das Umlenkrad zwangsweise bewirken. Die Hülsenfreiläufe mit Nadellagerung dienen außerdem der Lagerung der Buchsen 5 auf dem Bolzen 1. Die Anordnung der Buchsen 5 relativ zum Bolzen ist durch abdichtende Außenbleche 6' über eine Schraubverbindung 7 befestigt.

Die Rotation des Bolzens wird wie folgt realisiert:
Die Drehmomentübertragung bei Drehung in Sperrichtung erfolgt im Inneren des Hülsenfreilaufs über einzeln angefederte Klemmrollen bzw. Nadeln, die gegen keilförmig ausgebildete Klemmflächen im Außenring gedrückt werden. In der Gegenrichtung, d.h. der Freilaufrichtung, können sie auf dem Bolzen abrollen. Nadelfreiläufe sind als Standardbauteile mit und ohne Lagerung erwerbbar.

In Figur 2 ist ein Kettenglied einer Förderkette mit schrittweise zwangsgeführt drehendem Bolzen mit Schlingfeder gemäß der Variante 2 dargestellt:
Der Bolzen 1 ist über seine gesamte Länge in Buchsen 2, 5 gelagert. Zusammen mit der Buchse 2, die die Innenlaschen 3 trägt, bildet er ein Gelenk im herkömmlichen Sinne. Zwischen dem Bolzen 1 und den Buchsen 5 befindet sich jeweils ein Nadellager 8. Die schrittweise Drehung des Bolzens wird durch Schlingfedern 10 bewirkt, die jeweils auf der Buchse 5 und einer Hülse 6 unter radialer Vorspannung angeordnet sind. Die Hülsen 6 sind mittels eines Verbindungsbolzens 7 fest mit dem Bolzen 1 verbunden.

Realisierung der Rotation:
Bei Drehung in Windungsrichtung der Feder, d.h. Sperrichtung wird die Feder zusätzlich gespannt und kann ein Drehmoment zwischen Buchse 5 und Hülse 6 übertragen. In der Gegenrichtung kann sie sich auf Buchse 5 bzw. Hülse 6 drehen.

In den nachfolgenden Figuren bleibt die Bedeutung der Bezugszeichen gleich, so daß um Wiederholungen zu vermeiden nur auf abweichende oder neue Teilmerkmale eingegangen wird.

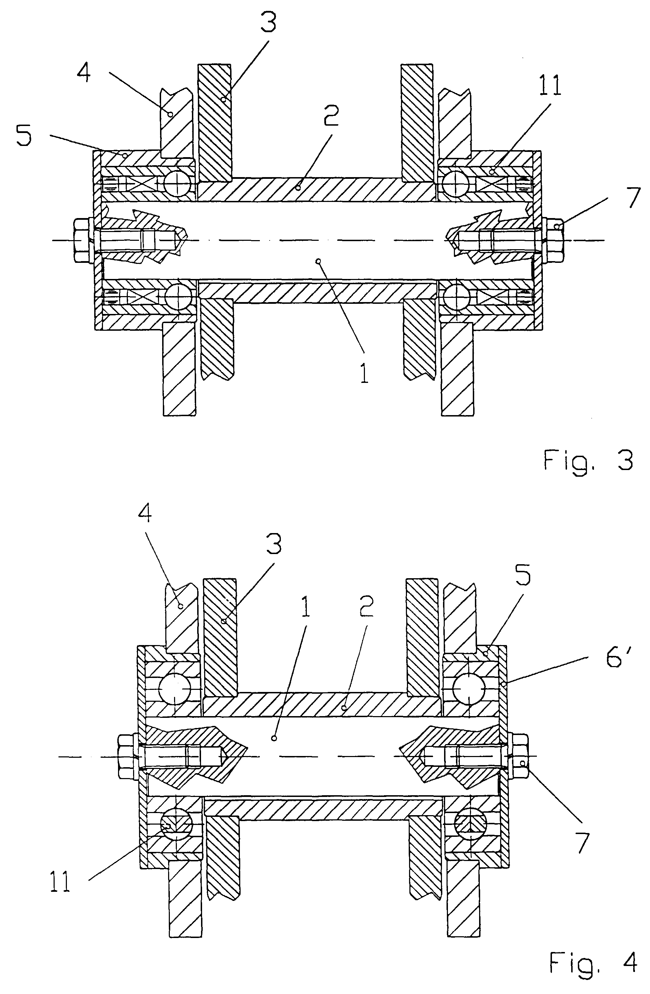

In Figur 3 ist in den Buchsen 5 ein Klemmkörperfreilauf 11 vorgesehen . Auch der Klemmkörperfreilauf eignet sich dazu den Bolzen 1 in einer Verdrehrichtung zuwangszuführen. Eine alternative Ausführungsform für die Anordnung des Klemmkörperfreilaufs zeigt Figur 4.

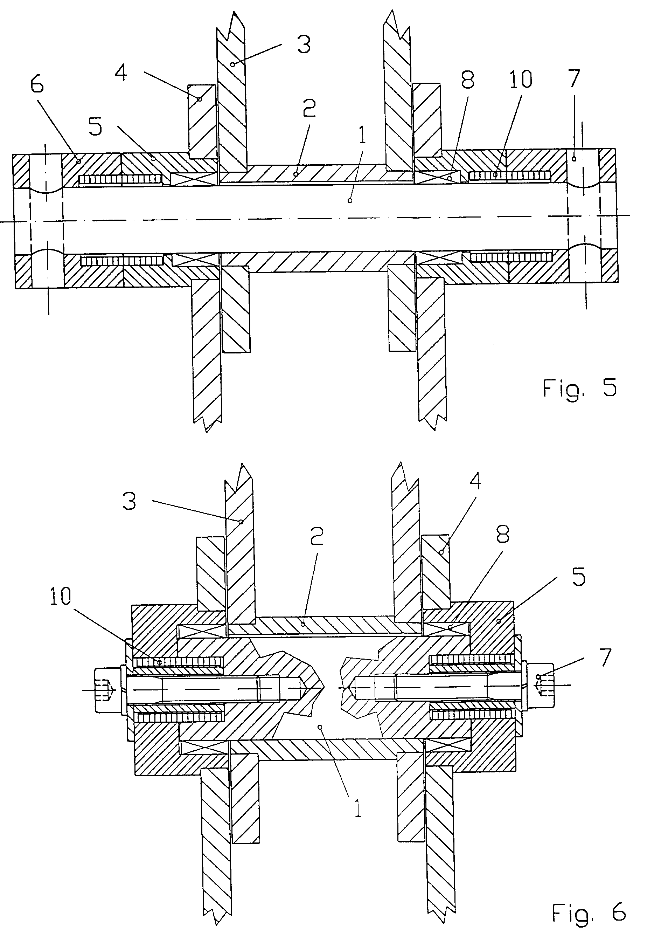

In Figur 5 ist eine Ausführungsvariante mit Schlingfeder 10 dargestellt. Die Schlingfeder verbindet die Buchse 5 mit der fest an dem Bolzen befestigten Hülse 6. Überdies ist die Buchse 5 mit einem Nadellager 8 als Teil des Freilaufsystems verbunden, das nur eine einzige Verdrehrichtung zuläßt.

In Figur 6 ist eine sehr kompakte Anordnung dargestellt. Die Buchsen 5 überragen jeweils stirnseitig den Bolzen 1, so daß sie an ihrer oberen Berührfläche über ein Nadellager 8 mit dem Bolzen 1 in Verbindung treten unter mit ihrer gegenüberliegenden Seite mit einer Schlingfeder 10.

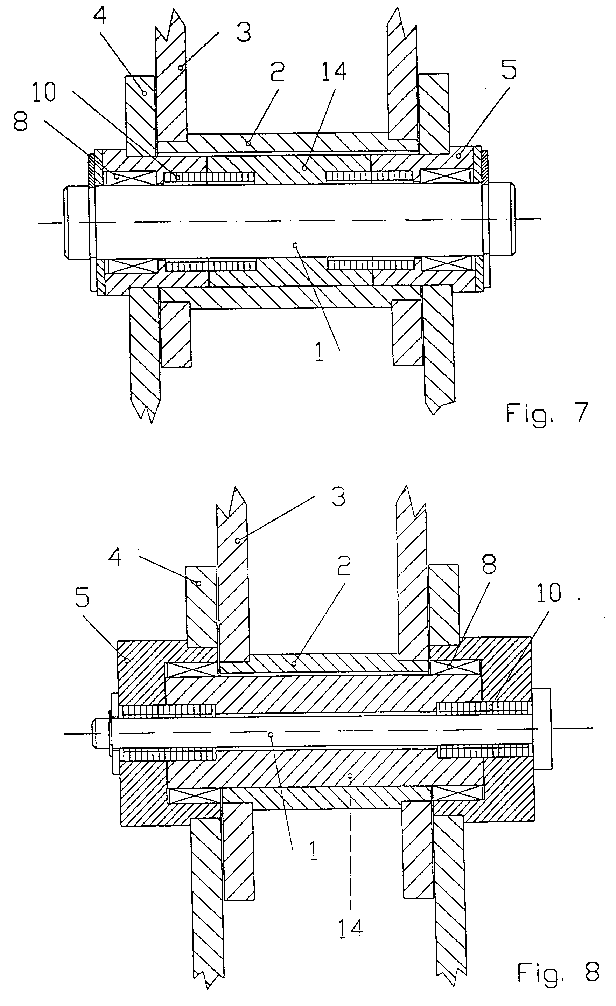

In Figur 7 ist zusätzlich ein Zusatzbuchse 14 vorgesehen, die sich zwischen der mittigen Buchse 2 und dem Bolzen 1 erstreckt. Die Zusatzbuchse 14 ist über Schlingfedern 10 mit den Buchsen 5 verbunden, die wiederum mit dem Bolzen 1 über ein Nadellager 8 in Verbindung stehen.

Eine weitere Ausführungsform sieht Figur 8 vor, die zusätzlich zu der Ausführungsform von Figur 6 eine Zusatzbuchse 14 aufweist.

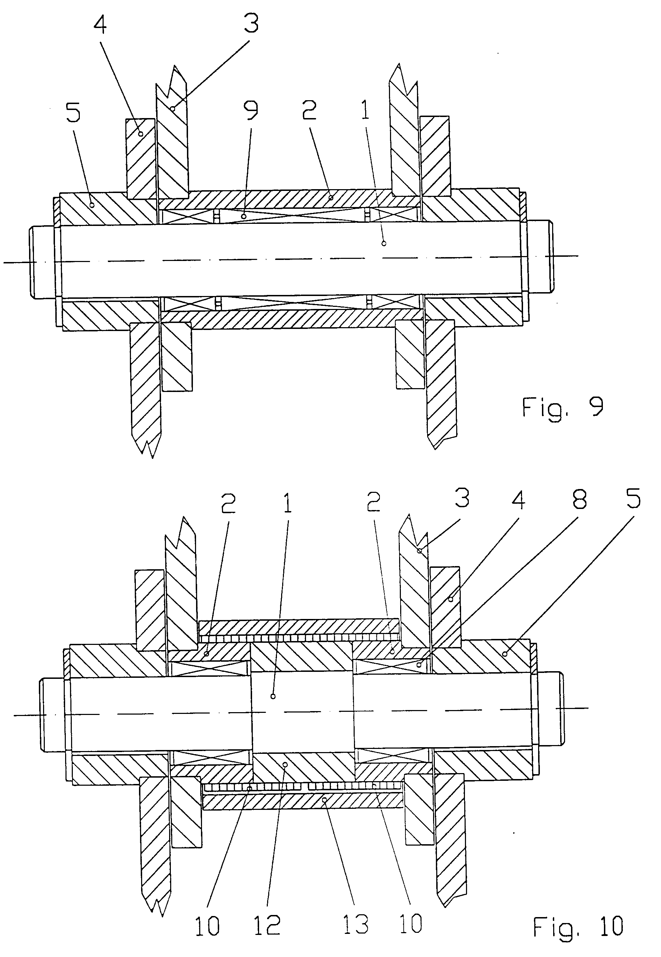

In Figur 9 ist eine Ausführungsvariante mit Hülsenfreilauf gemäß der Variante 1 (Figur 1) dargestellt. Der Hülsenfreilauf befindet sich (im Gegensatz zur Figur 1) zwischen dem Bolzen 1 und der mittig angeordneten Buchse 2. Die weiteren Buchsen 5 bilden mit dem Bolzen 1 das Gelenk im herkömmlichen Sinne.

In Figur 10 ist eine Ausführungsvariante mit Schlingfedern gemäß der Variante 2 (Figur 2) dargestellt. Die mittig angeordnete Buchse 2 ist zweigeteilt und mittels Nadellagern 8 auf dem Bolzen 1, der gestuft ausgeführt ist, gelagert. Auf den Bolzen ist eine Zusatzbuchse 12 aufgepreßt. Die Schlingfedern 10 sind auf dieser und auf den Buchsen 2 angeordnet. Zum Schutz der Schlingfeder dient eine Rolle 13. Die weiteren Buchsen 5 bilden (wie in Figur 9) mit dem Bolzen 1 das Gelenk im herkömmlichen Sinne.

### BEZUGSZEICHENLISTE

- 1: Bolzen
- 2: Buchse (mittig)
- 3: Innenlasche
- 4: Außenlasche
- 5: Buchse
- 6: Hülse, Teil
- 6': Außenblech
- 7: Verbindungselement
- 8: Nadellager
- 9: Hülsenfreilauf
- 10: Schlingfeder
- 11: Klemmkörperfreilauf
- 12: Zusatzbuchse 13 Rolle

## Patentansprüche

1. Kette mit Kettengliedern, die einen zentralen Bolzen aufweisen, um den mittig eine Buchse drehbar angeordnet ist, über die der Bolzen beidseitig hinausragt und die mit Innenlaschen verbunden ist sowie mit beidseitig an der Buchse angrenzenden, den Bolzen drehbar umgebenden weiteren Buchsen, an denen jeweils Aussenlaschen befestigt sind, dadurch **gekennzeichnet**, daß an wenigstens einer der weiteren Buchsen oder an der mittig angeordneten Buchse eine Vorrichtung angebracht ist, die mit dem Bolzen in Wirkverbindung tritt und eine relative Drehbewegung des Bolzens zur Buchse in eine Verdrehrichtung ermöglicht und in entgegengesetzter Drehrichtung eine verdrehsichere Verbindung zwischen Bolzen und Buchse schafft.

2. Kette nach Anspruch 1, dadurch **gekennzeichnet**, daß die Vorrichtung ein Hülsenfreilauf ist.

3. Kette nach Anspruch 1, dadurch **gekennzeichnet**, daß die Vorrichtung ein Klemmkörperfreilauf ist.

4. Kette nach Anspruch 1, dadurch **gekennzeichnet**, daß die Vorrichtung ein Klemmrol-lenfreilauf ist.

5. Kette nach Anspruch 1, dadurch **gekennzeichnet**, daß zwischen einer Buchse und einem fest mit dem Bolzen verbundenen Teil eine Schlingfeder vorgesehen ist, die bei Verdrehung in ihrer Windungsrichtung ein Drehmoment zwischen Buchse und Teil überträgt.

6. Kette nach Anspruch 1, dadurch **gekennzeichnet**, daß die Vorrichtung in Form einer Klinkensperre ausgebildet ist, die formschlüssig mit dem Bolzen in Wirkverbindung tritt.
